# FASCICULE DE BREVET EUROPEEN

(11) **EP 0 915 665 B1**
(45) Date de publication et mention de la délivrance du brevet: **13.11.2002**
(21) Numéro de dépôt: 97934597.2
(22) Date de dépôt: 18.07.1997
(51) Int. Cl.: A23L 1/16

(54) **ALIMENTS MIS EN FORME ET PRECUITS A BASE DE CEREALES ET PROCEDE D'OBTENTION**
VORGEBACKENE GEFORMTE GETREIDENAHRUNGSMITTEL UND DEREN HERSTELLUNG
SHAPED, PRE-COOKED CEREAL-BASED FOODS AND METHOD FOR PREPARING SAME

(30) Priorité: 19.07.1996 FR 9609124
(43) Date de publication de la demande: 19.05.1999
(73) Titulaire: INSTITUT NATIONAL DE LA RECHERCHE AGRONOMIQUE (INRA), 75341 Paris Cédéx 07 (FR); RIVOIRE ET CARRET LUSTUCRU, 13003 Marseille (FR)
(72) Inventeur: ABECASSIS, Joel, F-34290 Le Crès (FR); AREKION, Isabelle, F-13013 Marseille (FR); CHAURAND, Marc, F-34980 Montferrier sur Lez (FR); COLONNA, Paul, F-44300 Nantes (FR); DELLA VALLE, Guy, F-44300 Nantes (FR); FAVIER, James, F-63118 Cébazat (FR); MINIER, Chantal, F-13400 Aubagne (FR)
(74) Mandataire: Phélip, Bruno
(86) Numéro de dépôt international: FR9701345
(87) Numéro de publication internationale: WO98003083

(56) Documents cités:
- EP-A- 0 338 282
- FR-A- 2 502 907
- FR-A- 2 525 439
- US-A- 5 134 926
- C.MESTRES;ET AL: "gelation and crystallisation of maize Starch after pasting, drum-drying or extrusion cooking" JOURNAL OF CEREAL SCIENCE, vol. 7, 1988, pages 123-134, XP000197132 cité dans la demande
- BILIADERIS COSTAS G. ;ET AL: "thermophysical properties of milled rice starch as influenced by variety and parboiling method" CEREAL CHEMISTRY, vol. 70, no. 5, 1993, pages 512-516, XP000647356 cité dans la demande

## Description

La présente invention est relative à des aliments mis en forme et précuits à base de céréales.

Elle est en outre relative à un procédé d'obtention de ces aliments.

La cuisson, dans l'eau à l'ébullition, de nombreux aliments céréaliers, dont les pâtes alimentaires, vise, principalement, les trois objectifs suivants:
- élever la température des produits à consommer;
- gélatiniser l'amidon;
- modifier leur texture, en particulier par absorption d'eau afin qu'ils acquièrent un comportement rhéologique spécifique.

D'un point de vue organoleptique, les produits doivent après cuisson rester fermes et élastiques sous la dent sans devenir collants ou délitescents. Les propriétés de fermeté et d'élasticité, appelées d'une manière générale « propriétés viscoélastiques », constituent un des éléments déterminants de la qualité des produits céréaliers cuits. Ils doivent aussi conserver leurs formes générales. Pendant longtemps, il a été acquis que la cuisson des pâtes alimentaires par ébullition était indispensable pour l'obtention de bonnes propriétés viscoélastiques.

Depuis quelques années, les industriels proposent des produits précuits ou à cuisson rapide.

Différents procédés ont ainsi été développés tendant à réduire l'épaisseur du produit, accroître sa porosité ou encore augmenter sa teneur en eau initiale. Tous ces procédés incluent un traitement hydrothermique permettant la gélatinisation de l'amidon et la dénaturation des protéines et évitant de ce fait la cuisson dans une eau à l'ébullition des produits. Ce traitement peut être réalisé dans de l'eau bouillante, par cuisson-extrusion, par micro-ondes ou encore à l'aide de vapeur saturante ou surchauffée. La mise en oeuvre de ces techniques dans divers procédés a conduit à la commercialisation de produits dans des gammes très diversifiées (produits secs, frais, humides, sous vide, etc.).

Ainsi, la demande de brevet EP-338 282 (ROSSI et CATELLI S.p.A.) décrit un procédé de stérilisation et de cuisson ou de précuisson de produits à base de pâte. La pâte est d'abord introduite sous forme brute, c'est-à-dire non formée, dans un autoclave à une température comprise entre 90° et 170°C puis mise sous la forme d'une bande mince, avant d'être transférée dans une enceinte sous vide afin de diminuer sa quantité d'eau. Ce n'est qu'après refroidissement que la pâte ainsi traitée est mise sous la forme désirée.

Cette demande ne précise pas les temps de traitement pour la mise en oeuvre des différentes étapes.

De plus, les produits finaux obtenus par le procédé décrit dans cette demande ne sont pas décrits. En particulier, aucune indication n'est donnée quant à la qualité organoleptique des produits précuits, après réhydratation.

L'article de FAVINI (1995, Italian Food and Beverage Technology, VI, 36-37) décrit, de manière très générale , un appareillage pour cuisson en continu et la stabilisation de céréales et de légumes à l'aide de vapeur sous pression. L'humidité lors du traitement peut varier en fonction des produits à traiter. Cet article ne mentionne pas l'utilisation du procédé pour précuire des aliments.

Le brevet US-5 134 926 (DEFRANCISCI) décrit un procédé dans lequel des pâtes courtes sont précuites par une vapeur saturante afin d'éliminer leur aspect collant et d'augmenter leur cohésion. Les conditions de traitement sont décrites de manière succincte. En particulier la température n'est pas indiquée.

La demande EP-3O9 413 (BARILLA) décrit quant à elle un procédé de stérilisation par vapeur sèche suivie d'une cuisson dans de l'eau, et non dans de la vapeur. Dans la demande FR-2.502.907 ( IBP ) les pâtes sont aussi précuites dans de l'eau bouillante acidulée.

D'autres procédés comprennent une étape de précuisson par de la vapeur à une pression atmosphérique. Ainsi, la demande EP-222.965 (VIAZZO & VIAZZO) décrit la précuisson de riz par de la vapeur à la pression atmosphérique, puis par de la vapeur sous pression. Les conditions de ces traitements (durée, température) ne sont pas indiquées. La demande FR-2,525,439 (IBP) décrit une précuisson par de la vapeur surchauffée, et non saturée, à la pression atmosphérique.

BILIADERIS et al. (1993, Cereal Chemistry, 70, 5, 512-516) ont étudié l'apparition de complexes cristallins constitués d'amylose et de lipides monoacylés lors de la cuisson de grains de diverses variétés de riz. Les auteurs ne déduisent aucune conséquence de la formation de tels complexes sur la qualité des produits obtenus. En tout état de cause, cet article ne concerne que des grains de riz, et non des farines ou des semoules qui nécessitent un traitement de mise en forme avant d'être consommées.

Aucun de ces documents ne décrit de procédé permettant l'obtention de produits alimentaires considérés comme précuits, et en particulier de pâtes alimentaires présentant des qualités organoleptiques acceptables par le consommateur. Par propriétés organoleptiques on entend notamment des propriétés liées à l'état de surface des pâtes cuites, leur texture, leur compressibilité et leur élasticité. En effet les produits de type pâte précuits décrits dans l'état de la technique présentent tous, après réhydratation dans l'eau froide, des propriétés viscoélastiques, en particulier, inférieures à celles des produits ayant subi une cuisson normale, appelés ci-après produits témoins.

De manière générale, l'état de la technique, pour améliorer les propriétés viscoélastiques de ces produits décrit des procédés tendant à consolider le réseau protéique retenant l'amidon gélatinisé, et non à modifier la nature de l'amidon. Or les produits obtenus par ces procédés ne permettent pas d'obtenir de telles propriétés.

Le demandeur a trouvé de manière surprenante que l'obtention de produits alimentaires mis en forme et précuits à base de céréales, ou à base d'autres produits végétaux, conduisant quelles que soient les conditions de réhydratation, à des aliments présentant des qualités organoleptiques satisfaisantes, voire améliorées par rapport aux produits témoins, était possible par traitement desdits produits dans certaines conditions permettant la formation de complexes cristallins entre les lipides et l'amylose desdits produits.

On notera que de telles structures n'avaient été étudiées que d'un point de vue strictement fondamental sur les grains de riz ou des amidons purs, et en tout état de cause l'influence de leur formation sur les qualités organoleptiques des pâtes alimentaires à base de farines ou de semoules n'avait pas été étudiée. Or les farines et les semoules ont subi des traitements hydrothermomécaniques (laminage, extrusion...). Leurs propriétés sont donc très différentes de celles des grains.

La présente invention est donc relative à un aliment obtenu à partir de semoule et/ou de farine de céréales et/ou de tout autre produit amylacé fragmenté, ayant subi les différentes étapes d'hydratation (entre 8 et 70% de la matière sèche), de mise en forme selon le procédé de fabrication de la pâte alimentaire ou selon le procédé de fabrication du couscous, de précuisson et éventuellement de séchage, dont au moins 80% et, de préférence 90% en poids de l'amidon est gélatinisé, le taux de gélatinisation étant évalué par analyse enthalpique différentielle, et caractérisé en ce qu'il présente à l'analyse enthalpique différentielle effectuée en excès d'eau, un pic dont la température de sommet est supérieure à 100°C, et en ce qu'il possède une capacité de fixation d'eau d'au minimum 200% et préférentiellement d'environ 400% en poids de la matière sèche.

De manière avantageuse un tel aliment possède une capacité de fixation d'eau d'au minimum 200% et préférentiellement d'environ 400% en poids de la matière sèche.

Un tel aliment présente plus particulièrement une texture en bouche améliorée par rapport aux produits précuits déjà connus de l'homme du métier, mis dans le commerce, ou obtenus par des procédés décrits dans l'état de la technique.

La quantité de ces complexes peut être augmentée par l'ajout à l'aliment avant ou pendant sa mise en forme de lipides monoacylés, de phospholipides , de monoglycérides ou de matières naturelles riches en ces constituants.

Un tel aliment est préférentiellement une pâte alimentaire. Il peut aussi être des farines, des semoules, des flocons ou d'autres produits issus de la première transformation des grains de céréales, des aliments céréaliers mis en forme à partir de céréales contenant du gluten, tels que le couscous et des produits fermentés, ou encore des aliments céréaliers mis en forme à partir de céréales sans gluten . Dans ce dernier cas, il est nécessaire d'utiliser un liant par exemple une fraction d'une farine de blé, de gluten, ou d'amidon gélatinisé, ou tout autre liant permettant de mettre en forme les produits avant leur traitement hydrothermique. Un tel aliment peut aussi être à base de produits amylacés, obtenus notamment à partir de racines ou de tubercules. Ces produits, étant moins riches en lipides que les céréales, doivent être complémentés avec des lipides, afin de permettre la formation de complexes amylose-lipide.

La présente invention est de plus relative à un procédé de précuisson d'aliments obtenus à partir de farine et/ou de semoule de céréales et/ou de tout autre produit amylacé fragmenté dans lequel lesdits aliments, mis en forme et présentant une teneur en eau comprise entre environ 10% et 70%, préférentiellement entre environ 15 et 50% en poîds de la matière sèche sont soumis à un traitement hydrothermique à une température comprise entre environ 120°C et 140°C, à une pression supérieure à la pression atmosphérique, durant une durée suffisante pour permettre la formation de complexes amylose-lipide cristallins, constituants caractérisés par un pic dont la température de sommet est supérieure à 100°C suivant l'analyse enthalpique différentielle effectuée en excès d'eau.

De manière préférentielle la durée du traitement est comprise entre environ 3O secondes et 10 minutes et est préférentiellement d'environ 2 à 5 minutes. Une telle durée est adaptée en fonction de l'aliment à précuire.

Dans le cas où le procédé est mis en oeuvre de manière continue, il est préférable de préchauffer l'aliment avant la précuisson, et éventuellement après la précuisson, par élévation de la température entre environ 60°C et 100°C et préférentiellement entre 80°C et 100°C, afin d'empêcher la prise en masse des produits traités en vrac, et toute condensation à leur surface et de renforcer leur résistance mécanique.

Les aliments précuits objets de la présente invention, et en particulier ceux obtenus par le procédé décrit ci-dessus, présentent des propriétés viscoélastiques au moins équivalentes à celles des produits témoins, c'est-à-dire des produits cuits par les méthodes classiques, quelles que soient les conditions de réhydratation, c'est-à-dire aussi bien à l'aide d'eau froide qu'à l'aide d'eau à ébullition.

Cette caractéristique est particulièrement avantageuse car les produits précuits décrits dans l'état de la technique, ou mis dans le commerce, ne permettent pas d'obtenir par une immersion prolongée dans de l'eau froide des aliments présentant des qualités organoleptiques satisfaisantes, c'est-à-dire des qualités organoleptiques au minimum équivalentes à celles des produits obtenus par cuisson traditionnelle sans précuisson.

Une telle caractéristique est très intéressante, en particulier dans le domaine de l'alimentation des collectivités.

En effet, les aliments selon la présente invention peuvent être mis à réhydrater par exemple durant la nuit dans de l'eau froide, puis rapidement réchauffés par de la vapeur avant d'être servis. Ceci permet de réduire les temps de préparation et , du fait du réchauffement quasi extemporané des aliments, de répondre à la demande des consommateurs, sans pour autant avoir à préparer des grosses quantités d'aliments qui risquent d'être perdues si la demande est trop faible.

Les aliments selon la présente invention peuvent également être utilisés par le consommateur, à titre individuel. Dans ce cas, les aliments qui sont précuits, doivent simplement être réhydratés (jusqu'à 180% m.s. environ) puis réchauffés rapidement, par exemple durant une minute dans un four à micro-ondes de puissance moyenne.

Ces aliments ainsi réchauffés présentent des caractéristiques culinaires remarquables, telles qu'une viscoélasticité élevée, une absence de collant et de délitescence.

Ils se distinguent en outre de ceux décrits dans l'état de la technique par une solubilisation moins importante de l'amidon lors de la réhydratation.

Les aliments précuits peuvent être mis sous leur forme finale, par tout moyen à la disposition de l'homme du métier, permettant l'obtention d'aliments consommables répondant aux critères définis ci-dessus. Ainsi, les aliments précuits peuvent être expansés par friture ou par traitement par de l'air chaud, afin de permettre l'obtention de beignets, de snacks ou de pellets.

La présente invention permet de préparer des pâtes alimentaires, présentant les qualités organoleptiques indiquées ci-dessus, à partir de diverses céréales, et non à partir de blé dur uniquement.

Le procédé selon l'invention peut être mis en oeuvre en particulier à l'aide d'un autoclave continu ou discontinu. Il peut néanmoins être mis en oeuvre à l'aide de tout autre appareil permettant d'obtenir les conditions physico-chimiques indiquées ci-dessus, éventuellement en continu.

Les aliments selon la présente invention sont préférentiellement mis en forme avant d'être précuits. Une telle mise en forme peut être effectuée, dans le cas des pâtes alimentaires, à l'aide d'une extrudeuse ou d'un laminoir.

Les aliments précuits selon la présente invention peuvent aussi être obtenus par un procédé comprenant les étapes suivantes:
- traitement desdits aliments ou de leurs matières premières afin de gélatiniser leur amidon, et
- traitement thermique desdits aliments à une température permettant la formation des complexes amylose lipide cristallins.

La première étape de ce procédé peut être effectuée entre 65°C et 100°C, dans de l'eau ou par de la vapeur sous pression atmosphérique.

La seconde étape peut être effectuée à une température comprise entre 120°C et 140°C environ avantageusement pendant le séchage du produit.

Ce procédé est particulièrement avantageux car il permet de limiter les dépenses énergétiques.

La présente invention est illustrée sans pour autant être limitée par les exemples qui suivent et les dessins annexés dans lesquels:
La figure 1 représente une courbe d'évolution de l'épaisseur de l'échantillon réhydraté en fonction de la contrainte qui y est appliquée.
Les figures 2 et 3 illustrent les évolutions, respectivement de la compressibilité et de la recouvrance relative, en fonction de la température à laquelle est mis en oeuvre le procédé selon l'invention, et en fonction du temps de réhydratation ( 2 et 3 heures).
Les figures 4 et 5 illustrent respectivement les évolutions de la compressibilité et de la recouvrance relative en fonction de la durée du traitement par le procédé selon l'invention à une température de 120°C et en fonction du temps de réhydratation ( 2 et 3 heures).
Les figures 6A à 6D sont des diagrammes d'analyse enthalpique différentielle de pâtes de blé dur n'ayant pas subi de précuisson (A) ou ayant subi des cuissons à des températures respectives de 100, 120 et 130°C (B, C et D).

### EXEMPLE 1:

### Obtention des aliments à base de blé dur selon l'invention.

Des pâtes à base de blé dur sont mises en forme à l'aide d'une presse. 800 g de semoule sont hydratés de manière à ce que la teneur en eau du mélange soit égale à 32% en poids de la matière humide (m.h.). La pâte est extrudée sous vide à travers une filière à spaghettis (diamètre/sec 1,5 mm) sous une pression de 10 Méga Pascals.

Les pâtes sont alors soumises à un traitement par de la vapeur saturée sous une pression de 0 à 3 Bars relatifs à une température comprise entre 100 et 140°C, pendant des durées comprises entre 1 et 10 min. Après traitement, elles sont séchées pour ramener leur teneur en eau à 12% m.h.

Les produits secs sont ensuite réhydratés dans de l'eau froide (20°C) puis analysés.

Les méthodes d'analyse sont les suivantes:

### 1°) Vitesse de réhydratation

La cinétique de réhydratation est définie comme le poids d'eau fixé par la pâte en fonction du temps de réhydratation. Les indices de vitesse de réhydratation sont t_{1/2} (min), le temps nécessaire à fixer le poids en eau égal à la moitié du poids maximal d'eau fixée, et t₁₈₀ (min), le temps nécessaire à atteindre une teneur en eau équivalente à la pâte sèche cuite durant 7 minutes en eau bouillante (soit 180% m.s.).

### 2°) Capacité maximale de fixation d'eau

Le poids maximal d'eau pouvant être contenu dans la pâte réhydratée est noté Hₘₐₓ (% m.s.). Ce paramètre a été mesuré en laissant reposer la pâte durant 20 heures dans l'eau froide (20°C).

### 3°) Viscoélasticité

La viscoélasticité est mesurée à l'aide d'un viscoélastographe CHOPIN tel que décrit par FEILLET et al. (1977, The viscoelastograph: its use in the evaluation of the cooking value of durum wheat. 62nd Annual AACC meeting, 23-27 October, San Francisco). Les conditions utilisées sont celles décrites par Alary et al.(1978, Getreide, Mehl u. Brot, 32, 10, 276). Cinq brins de 4 à 5 cm de spaghetti sont découpés et conservés environ 60 min dans une boîte de Pétri en atmosphère saturée d'eau puis 2 cm sont prélevés sur chacun de ces brins et soumis à une charge de 500g. La variation d'épaisseur des échantillons est mesurée en fonction du temps pendant 40 secondes de compression et 20 secondes de relaxation.

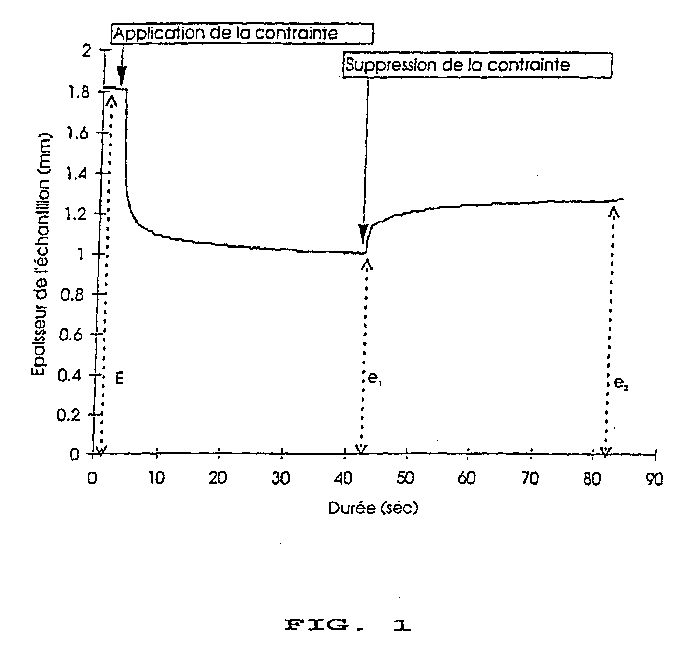

A partir des valeurs E, e₁ et e₂ lues sur le viscoélastogramme (figure 1), on calcule les valeurs de la déformation totale à la compression [C=100 x (E-e₁)/E], qui rend compte de la tendreté ou compressibilité (par opposition à la fermeté), et les valeurs de la déformation recouvrable [R = 100 x (e₂-e₁)/(E-e₁)] qui correspond à l'élasticité et l'indice de viscoélasticité (IV) calculé par l'équation (R/C) x 10. Ces valeurs sont issues de la moyenne des valeurs enregistrées sur cinq mesures.

### 4°)Analyse enthalpique différentielle (A.E.D)

Les mesures des endothermes de fusion sont réalisées de la manière décrite par MESTRES et al. (Gelation and Cristallisation of Main Starch after pasting, Drum drying or extrusion cooking, J. of Cer. Sci.,1988, 7, 123-124) entre 10 et 160°C sur un appareil SETARAM DSC 121. La cinétique de chauffage est de 3°C/min. La capsule échantillon contient 20 mg de produit lyophilisé et broyé et 100 mg d'eau. La capsule de référence contient 120 mg d'eau.

### Résultats:

La capacité de fixation d'eau de la pâte précuite augmente de 180 à 400% m.s., lorsque la température du traitement s'accroît de 100 à 140°C. Un traitement au moins égal à 100°C est nécessaire et suffisant pour obtenir un taux de réhydratation comparable à celui de la pâte sèche témoin ayant subi une cuisson de 7 minutes (soit 180% m.s.).

La vitesse de réhydratation est indépendante de l'intensité du traitement hydrothermique. C'est pourquoi une durée d'immersion d'environ 2 h 30 min est nécessaire pour que les produits atteignent un taux de réhydratation équivalent à celui de la pâte témoin.

Après immersion et réhydratation pendant 3 heures dans de l'eau froide, seules les pâtes traitées à des températures supérieures à 120°C présentent des propriétés viscoélastiques (mesurées à l'aide du viscoélastographe) comparables à celles des pâtes témoins (compressibilité = 60, recouvrance relative = 30).

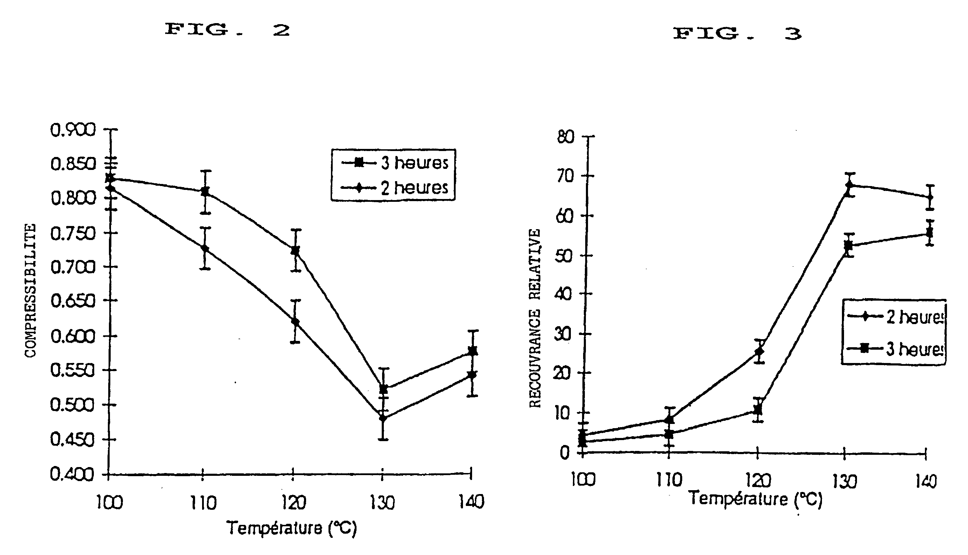

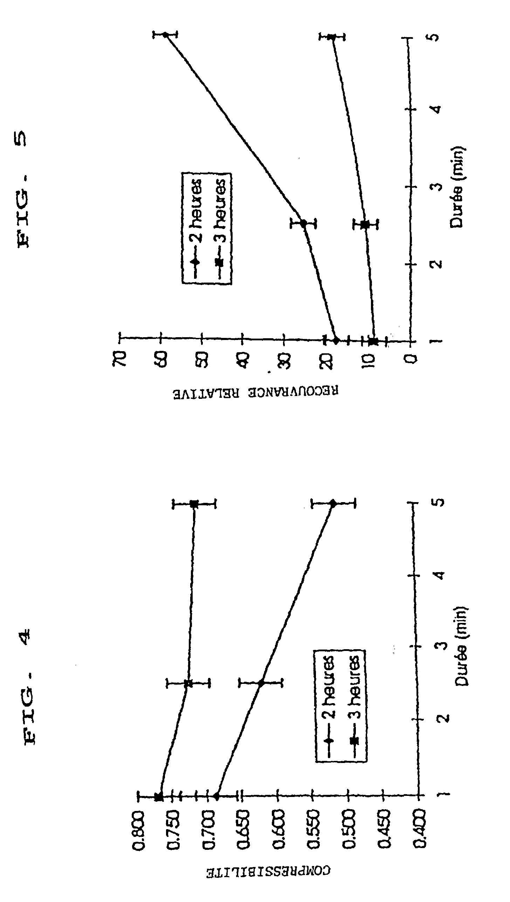

Les figures 2 à 5 illustrent l'incidence de la température et de la durée du traitement hydrothermique sur les propriétés viscoélastiques des pâtes alimentaires ainsi que la durée de réhydratation.

Les traitements supérieurs à 130°C et de longue durée entraînent une modification sensible de la coloration des produits (brunissement, développement d'une nuance rouge).

Lorsque les pâtes alimentaires sont mises à cuire dans l'eau bouillante, les produits traités à 120°C manifestent toujours des propriétés viscoélastiques supérieures à celles de la pâte témoin non traitée qui elle-même possède des propriétés viscoélastiques supérieures à une pâte traitée à 100°C.

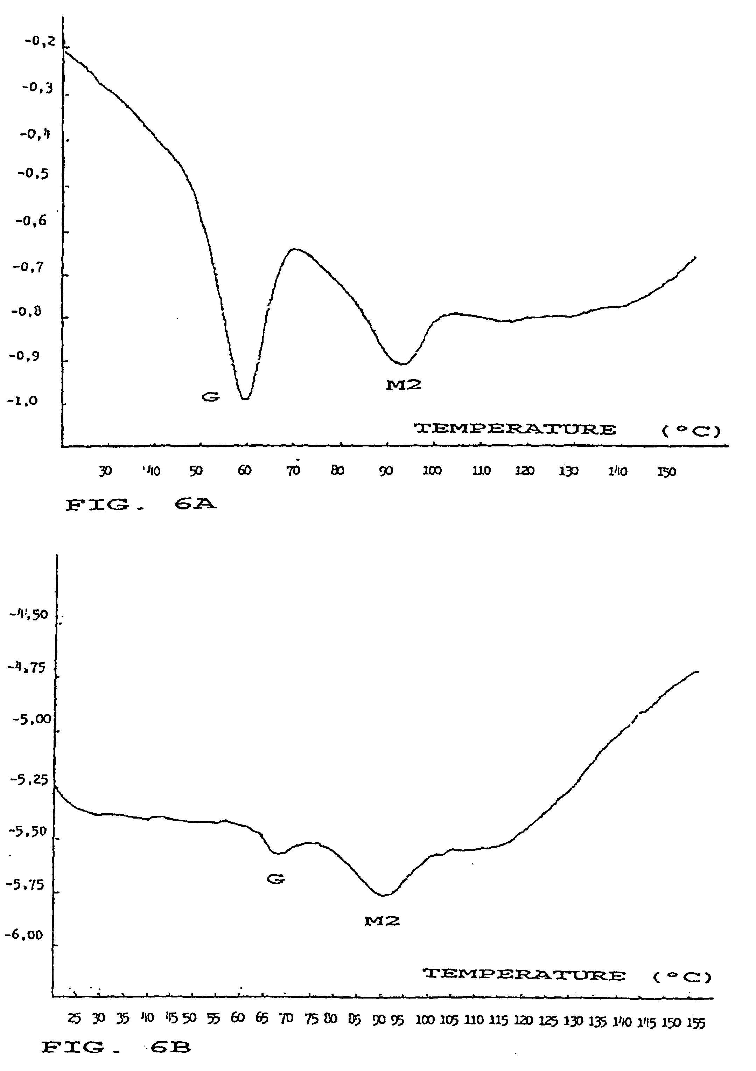

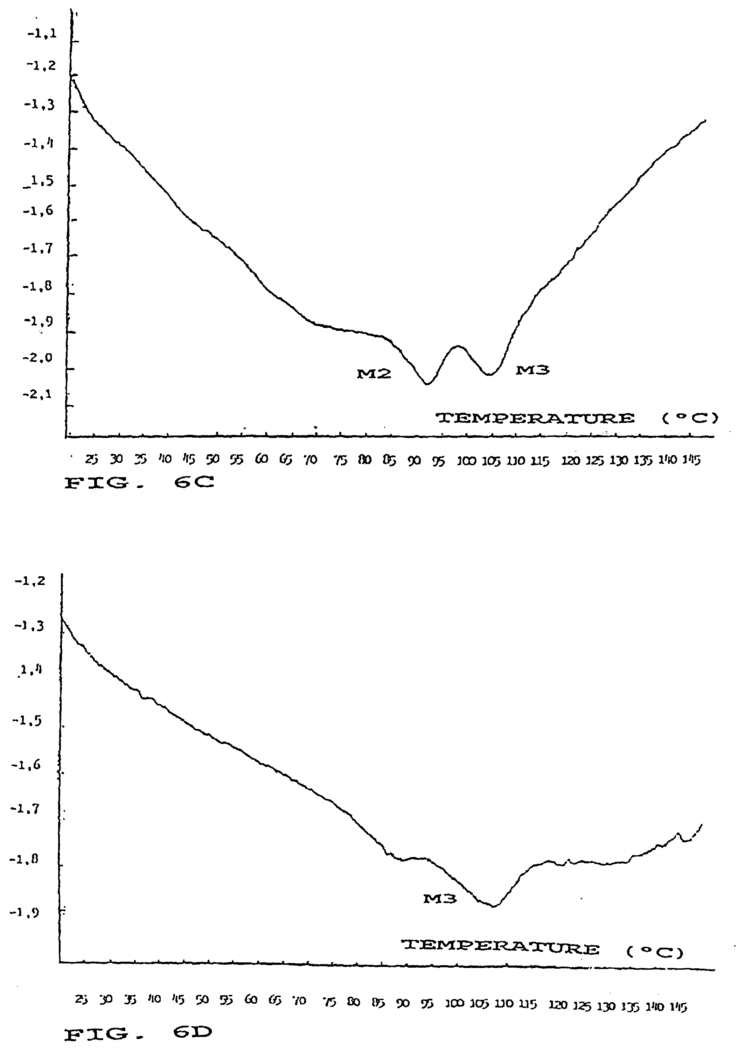

Les pics du diagramme d'analyse enthalpique différentielle de la figure 6 se caractérisent par les températures de début et de fin de pic, la température du sommet (ou température du pic) et l'aire du pic (ou enthalpie). Ils sont les suivants:
G = pic de fusion des cristallites du grain d'amidon (gélatinisation).
M2 = pic de fusion de complexes amylose-lipide amorphes.
M3= pic de fusion de complexes amylose-lipide cristallins.

La présence d'un pic M3 coïncide avec des propriétés organoleptiques améliorées.

Les courbes A à D correspondent respectivement à une absence de précuisson (A), et des précuissons à 100°C, 120°C et 130°C.

Le taux de gélatinisation est apprécié par le taux de fusion F défini par rapport au pic G par la formule suivante:
F = (ΔHO - ΔHm) /ΔHO
ΔHO = Enthalpie de gélatinisation de l'amidon de la pâte fraîche (4,5 ]/g - température du pic G vers 60°C)
ΔHm = enthalpie de gélatinisation de l'amidon de l'échantillon considéré (aire du pic G).

Conduite en excès d'eau, l'analyse enthalpique différentielle fournit les résultats suivants:
A = Le grain d'amidon gélatinise (pic G) et des complexes amorphes se forment; les complexes amorphes fondent vers 90°C (pic M2).
B = Les complexes formés pendant la précuisson ou pendant l'analyse fondent (pic M2).
C = Les complexes amorphes formés pendant la précuisson ou pendant l'analyse fondent (pic M2).
Les complexes cristallins formés pendant la précuisson fondent (pic M3 dont la température est supérieure à 100°C).
D = Les complexes cristallins formés pendant la précuisson fondent (M3) mais la quantité de complexes cristallins est supérieure à celle observée sur la courbe C, car les complexes amorphes sont presque inexistants: la quasi totalité des lipides disponibles est mobilisée dans des complexes cristallins.

### EXEMPLE 2

### Comparaison entre des aliments à base de blé dur précuits selon l'invention et des aliments précuits disponibles dans le commerce.

Les produits précuits selon l'invention ont été obtenus comme décrit dans l'exemple 1, à la seule différence que les traitements hydrothermiques sont effectués par de la vapeur sous pression à 120 et 130°C pendant 2 min.

Ces produits précuits ont alors été réhydratés et comparés avec des produits précuits disponibles dans le commerce ayant subi le même type de réhydratation.

L'influence du mode de réhydratation des produits précuits selon la présente invention est résumée dans le tableau I.

La comparaison des résultats fait nettement ressortir l'intérêt d'un traitement thermique à haute température sur la qualité des pâtes alimentaires. De remarquables propriétés viscoélastiques sont conservées pour tous les modes de réhydratation.

Les résultats des analyses instrumentales sont confortés par ceux des analyses sensorielles qui fournissent d'excellentes notes aussi bien pour l'état de surface, le collant et la texture.

Des essais de réhydratation pendant toute une nuit à 4°C de spaghetti traités à 120°C ont montré une diminution de leurs propriétés viscoélastiques. Néanmoins les produits ainsi préparés retrouvent d'excellentes propriétés viscoélastiques après avoir été plongés une minute dans de l'eau bouillante.

Enfin, une étude comparative par analyse sensorielle (groupe de 6 personnes) a été réalisée entre les produits traités pendant 2 min à 130°C et des pâtes alimentaires précuites actuellement commercialisées (Tableau II). Bien que des différences entre les formats aient entraîné des écarts entre les durées de réhydratation, les résultats regroupés dans le tableau ci-après montrent que le produit selon la présente invention est jugé comme nettement plus ferme et plus élastique que l'ensemble des produits commerciaux. Au cours de ces analyses sensorielles, le produit traité à 130°C a même parfois été jugé excessivement ferme, à la limite du cassant, par certains dégustateurs. Ce phénomène semble être relié à la rétrogradation de l'amidon. Le simple fait de plonger les pâtes quelques instants dans l'eau bouillante suffit à leur redonner leur viscoélasticité.

### EXEMPLE 3 : Obtention de pâtes précuites à base de blé tendre.

800 g de farine de blé tendre sont hydratés à 33% mh, additionnés ou non de lipides (0,5% ou 1%), mélangés pendant 20 minutes, extrudés sous vide à travers un moule sous une pression de 10 MPa afin d'obtenir des spaghettis de 1,5 mm de diamètre.

Les produits ainsi mis en forme sont précuits par injection de vapeur sous une pression de 0 à 2 Bars relatifs. Ils sont ensuite séchés (12% m.h.).

Leur qualité culinaire est alors évaluée d'après l'évolution de leur état de surface, de leur indice de viscoélasticité (I.V.), et de l'épaisseur des brins (par le rapport E/Eₒ : épaisseur de la pâte après cuisson/épaisseur de la pâte initiale) pendant une cuisson en eau bouillante. Pour référence, une pâte de blé dur de qualité acceptable cuite «normalement» présente un état de surface faiblement délitescent, faiblement collant et un indice de viscoélasticité d'environ 10 après 8 minutes de cuisson en eau bouillante et d'environ 7 après 13 minutes de cuisson.

Le tableau III résume les résultats obtenus.

Sans traitement de précuisson ou après un traitement de précuisson sous pression atmosphérique (100°C), la pâte de blé tendre cuite en eau bouillante (cuisson 8 minutes) ne présente aucune viscoélasticité. Elle est collante et très délitescente.

Le traitement de précuisson à 130°C confère à la pâte un indice de viscoélasticité acceptable. Les pâtes deviennent faiblement collantes et présentent un bon état de surface.

Les pâtes additionnées en lipides présentent des indices de viscoélasticité très élevés après 8 minutes de cuisson, qui sont encore acceptables après 5 minutes de surcuisson. L'addition de lipides améliore également le collant et l'état de surface. En prolongeant la cuisson jusqu'à 13 minutes, les produits additionnés de lipides conservent un indice de viscoélasticité acceptable, respectivement de 4,0 et 7,0 pour une addition de 0,5 et 1% de lipides.

### EXEMPLE 4 : Obtention de pâtes précuites à base d'un mélange de farine de blé tendre (30 %) et de farine de maïs (70%), additionnées en lipides (0,5%).

La farine de blé tendre, additionnée en lipides, est hydratée à 33% mh.

La farine de maïs est hydratée à 45% mh, puis soumise à un traitement thermique à la vapeur à 100 °C (afin de gélatiniser l'amidon et faciliter la mise en forme).

Le mélange de farine de blé tendre et de farine de maïs est mélangé 15 minutes sous vide puis extrudé sous vide (pression d'extrusion : 10 MPa).

Les produits ainsi mis en forme sont précuits par injection de vapeur sous pression. Ils sont ensuite séchés (12% mh).

Leur qualité culinaire est alors évaluée.

Le tableau III résume les résultats obtenus.

Les pâtes non précuites ou précuites à une température inférieure à 120°C ont un état de surface moyen. Elles ne présentent pas de viscoélasticité après cuisson.

Les pâtes précuites à une température au moins égale à 120°C ont un état de surface au-dessus de la moyenne et ne sont pas collantes. Leur indice de viscoélasticité (IV) est élevé et est maintenu après surcuisson (I.V.= 7,0 pour 13 minutes de cuisson).

### EXEMPLE 5: Obtention de pâtes précuites fabriquées uniquement à partir de farine de maïs.

La farine de maïs est hydratée à 45% mh, soumise à un traitement thermique à la vapeur à 100°C (afin de gélatiniser l'amidon et permettre la mise en forme), mélangée 15 minutes sous vide puis extrudée sous vide (pression d'extrusion: 10.MPa).

Les produits ainsi mis en forme sont précuits par injection de vapeur sous pression. ils sont ensuite séchés (12% mh). Leur qualité culinaire est alors évaluée.

Les résultats sont résumés dans le tableau III.

Sans traitement de précuisson, la pâte « fond » dans l'eau de cuisson (en effet, elle absorbe de l'eau mais le rapport E/Eₒ reste très proche de 1. Il devient même inférieur à 1 après surcuisson).

Le traitement de précuisson (130°C) confère à la pâte une résistance à la cuisson en eau bouillante (la dissolution dans l'eau de cuisson est très diminuée, comme le montre l'augmentation de l'épaisseur des brins) et des propriétés viscoélastiques acceptables sont obtenues (IV = 7,8).

**TABLEAU I**

| Mode de réhydratation | Caractéristiques mesurées | Témoin non traité | Traitement 2min à 100°C | Traitement 2min à 120°C |
|---|---|---|---|---|
| Eau froide 4°C | temps réhydratation | 2 h. | 2 h 45 | 3 h. |
| | couleur | blanche | blanche | blanche |
| | note sensorielle | ES=7 ; Text=2 | ES=8 ; Text=3 | ES=9 ; Text=5 |
| | épaisseur spaghetti | 1.60 | 2.08 | 2.17 |
| | compressibilité | 64.5 | 50.3 | 41.9 |
| | élasticite | 0 | 37.0 | 53.3 |
| | durée max, réhydratation | | | < 10h |
| Eau froide 20°C | temps réhydratation | 1h15 | 1h15 | 1h40 |
| | couleur | blanche | jaune clair | jaune clair |
| | note sensorielle | ES=9 ; Text=2 | ES=9 ; Text=3 | ES=9 ; Text=6 |
| | épaisseur spaghetti | 1.63 | 2.10 | 2.09 |
| | compressibilité | 73.6 | 57.7 | 38.5 |
| | élasticité | 4.6 | 26.3 | 78.4 |
| | durée max. réhydralation | 2h30 | 2h 40 | 5h |
| eau chaude (60°C°) | temps réhydratation | 25 min | 25 min . | 25 min |
| | couleur | blanche | jaune clair | jaune clair |
| | note sensorielle | ES=8 ; Text=2 | ES=9 ; Text= 4 | ES=9 ;Text=8.5 |
| | épaisseur spaghetti | 1.72 | 2.13 | 2.12 |
| | compressibilité | 73.2 | 50.5 | 34.3 |
| | élasticité | 3.4 | 7 | 74.7 |
| | durée max. réhydratation | 1h | 2h | 4h |
| eau bouillante (100°C) | temps réhydratation | 7 min | 7 min 30 | 7 min |
| | couleur | claire | jaune | jaune |
| | note sensorielle | ES=7 ; Text=7.5 | ES=7 ; Text=8 | ES=7 ; Text=9 |
| | épaisseur spaghetti | 2.18 | 2.16 | 2.14 |
| | compressibilité | 46.2 | 48.8 | 40.3 |
| | élasticité | 56.4 | 51.2 | 67.2 |
| | durée max. réhydratation | 20 min | 21 min | |
| ES = Etat de surface | | | | |
| TEXT = Texture | | | | |

**TABLEAU II**

| | Durée de réhydratation | Etat de surface | Collant | Texture en bouche |
|---|---|---|---|---|
| Produit INRA traité 2 min à 130°C (format spaghetti) | 3 h | très bon | absent | très bon |
| BUITONI MACCHERONI COTTURA RAPIDA produit précuit | 1h | très bon | absent | mauvais |
| Coquillettes PANZANI «MAESTRIA» (épaisseur 0,7mm) produit précuit | 30 mn | très bon | absent | moyen |
| Macaroni MONOPRIX « Vite prêt » (épaisseur 0,6 mm) produit précuit | 1 h | très bon | absent | moyen |

**TABLEAU III**

| | | Cuisson 8 min IV | E/Eₒ |
|---|---|---|---|
| Blé tendre | non traité | 0,8 | 1,34 |
| | 100°C | 1.2 | 1,41 |
| | 130°C-3 min | 5.4 | 1.36 |
| Blé tendre 0,5% lipides | non traité | 1.2 | 1.33 |
| | 100°C | 1.1 | 1.38 |
| | 130°C-3 min | 12.0 | 1.39 |
| Blé tendre 1% lipides | non traité | 1.2 | 1.32 |
| | 100°C | 1.2 | 1.33 |
| | 130°C-3min | 15.2 | 1.31 |
| Maïs/blé tendre 0,5% lipides | non traité | 0.7 | 1.31 |
| | 100°C | 0.5 | 1.35 |
| | 120°C-3 min | 13.0 | 1.33 |
| Maïs | non traité | 0.5 | 1.03 |
| | 130°C-3 min | 7.8 | 1.17 |
| IV: indice de viscoélasticité | | | |
| E/Eₒ: épaisseur de la pâte après cuisson/épaisseur de la pâte sèche | | | |

## Revendications

1. Aliment obtenu à partir de semoule et/ou de farine de céréales et/ou de tout autre produit amylacé fragmenté, ayant subi les différentes étapes d'hydratation (entre 8 et 70% de la matière sèche), de mise en forme selon le procédé de fabrication de la pâte alimentaire ou selon le procédé de fabrication du couscous, de précuisson et éventuellement de séchage, dont au moins 80% et, de préférence 90% en poids de l'amidon est gélatinisé, le taux de gélatinisation étant évalué par analyse enthalpique différentielle, et **caractérisé en ce qu'**il présente à l'analyse enthalpique différentielle effectuée en excès d'eau, un pic dont la température de sommet est supérieure à 100°C, et **en ce qu'**il possède une capacité de fixation d'eau d'au minimum 200% et préférentiellement d'environ 400% en poids de la matière sèche.

2. Aliment précuit selon la revendication 1 **caractérisé en ce qu'**il contient des additifs de type lipides monoacylés ou monoglycérides.

3. Aliment précuit selon l'une des revendications 1 à 2 **caractérisé en ce qu'**il peut être préparé pour être consommé par réhydratation, par friture, ou expansion par air chaud.

4. Procédé de précuisson d'aliments obtenus à partir de farine et/ou de semoule de céréales et/ou de tout autre produit amylacé fragmenté dans lequel lesdits aliments mis en forme et présentant une teneur en eau comprise entre environ 10% et 70% en poids de la matière sèche, préférentiellement entre environ 15% et 50% en poids de la matière sèche, sont soumis à un traitement thermique à une température comprise entre environ 120°C et 140°C, à une pression supérieure à la pression atmosphérique, durant une durée suffisante pour permettre la formation de complexes amylose-lipide cristallins, constituants **caractérisés par** un pic dont la température de sommet est supérieure à 100°C suivant l'analyse enthalplque différentielle effectuée en excès d'eau.

5. Procédé selon la revendication 4, **caractérisé en ce que** la durée du traitement est comprise entre 30 secondes et 10 minutes, et préférentiellement entre 2 et 5 minutes.

6. Procédé selon l'une des revendications 4 et 5 **caractérisé en ce qu'**il est effectué en continu, auquel cas la température de l'aliment est élevée avant la préculsson entre environ 60°C et 100°C, et préférentiellement entre 80°C et 100°C, afin d'empêcher la prise en masse des produits traités en vrac.

7. Procédé de fabrication d'aliments à base de semoules et/ou de farines de céréales, et/ou de tout autre produit amylacé fragmenté éventuellement complémentés en lipides, mis en forme et précuits comprenant les étapes suivantes:
- traitement desdits aliments ou de leurs matières premières afin de gélatiniser leur amidon, et
- traitement thermique desdits aliments à une température permettant la formation des complexes amylose-lipide cristallins.

8. Aliment susceptible d'être obtenu par le procédé selon l'une des revendications 4 à 7.

## Claims

1. Food obtained from semolina and/or cereal flour and/or any other fragmented starchy product, having undergone various steps of hydration (between 8 and 70% of dry matter), of shaping according to the manufacturing process of pasta or the manufacturing process of couscous, of precooking and optionally of drying, in which at least 80% and preferably 90% by weight of the starch is gelatinized, the gelatinization level being evaluated by differential enthalpic analysis, and **characterized in that**, on differential enthalpic analysis performed in an excess of water, it shows a peak whose maximum temperature is greater than 100°C and **in that** it has a water fixation capacity of at least 200% and preferably about 400% by weight of dry matter.

2. Precooked food according to claim 1, **characterized in that** it contains additives of the type monoacylated lipids or monoglycerides.

3. Precooked food according to one of claims 1 and 2, **characterized in that** it may be prepared to be consumed by rehydration, by frying, or by expansion with hot air.

4. Method for precooking foods obtained from cereal flour and/or semolina and/or any other fragmented starchy product in which said foods, shaped and having a water content of between 10 and 70% by weight of dry matter, preferably between 15 and 50% by weight of dry matter, are subjected to a thermal processing at a temperature of between about 120°C and 140°C, at a pressure above atmospheric pressure, for a time sufficient to allow the formation of crystalline amylose-lipid complexes, components **characterized by** a peak whose maximum temperature is greater than 100°C according to differential enthalpic analysis performed in an excess of water.

5. Method according to claim 4, **characterized in that** the processing time is between 30 seconds and 10 minutes, and preferably between 2 and 5 minutes.

6. Method according to one of claims 4 and 5, **characterized in that** it is carried out continuously, in which case the temperature of the food is raised before the precooking to be between about 60°C and 100°C, and preferably to be between 80°C and 100°C, so as to prevent the caking together of the bulk products.

7. Method for manufacturing shaped and precooked foods based on semolinas and/or cereal flours, and/or any other fragmented starchy product optionally complemented with lipids, comprising the following steps :
- processing of said foods or their raw materials so as to gelatinize their starch, and
- thermal processing of said foods at a temperature enabling formation of crystalline amylose-lipid complexes.

8. Food able to be obtained by a method according to any one of claims 4 to 7.

## Patentansprüche

1. Nahrungsmittel, das aus Grieß und/oder Mehl von Getreiden und/oder irgendeinem anderen fragmentierten stärkehaltigen Produkt erhalten wird und den folgenden verschiedenen Schritten unterzogen wurde: Hydratisierung (zwischen 8 und 70% der Trockenmasse), Formgebung gemäß dem Verfahren zur Herstellung von Teigwaren oder gemäß dem Verfahren zur Herstellung von Kuskus, Vorkochen und gegebenenfalls Trocknung, wobei wenigstens 80 Gew.-% und vorzugsweise 90 Gew.-% der Stärke gelatinisiert sind, wobei der Gelatinisierungsgrad durch Differentialthermoanalyse bewertet wird, **dadurch gekennzeichnet, dass** es bei einer mit Überschuss von Wasser durchgeführten Differentialthermoanalyse ein Maximum aufweist, dessen Spitzentemperatur über 100 °C liegt, und dass es ein Wasserbindevermögen von wenigstens 200 Gew.-% und vorzugsweise ungefähr 400 Gew.-% der Trockenmasse besitzt.

2. Vorgekochtes Nahrungsmittel gemäß Anspruch 1, **dadurch gekennzeichnet, dass** es Zusätze des Typs monoacylierte Lipide oder Monoglyceride enthält.

3. Vorgekochtes Nahrungsmittel gemäß einem der Ansprüche 1 bis 2, **dadurch gekennzeichnet, dass** es durch Rehydratisierung, Fritieren oder Expansion mit heißer Luft zum Verzehr vorbereitet werden kann.

4. Verfahren zum Vorkochen von Nahrungsmitteln, die aus Mehl und/oder Grieß von Getreiden und/oder irgendeinem anderen fragmentierten stärkehaltigen Produkt erhalten werden, wobei die in Form gebrachten Nahrungsmittel, die einen Wassergehalt zwischen ungefähr 10 Gew.-% und 70 Gew.-% der Trockenmasse, vorzugsweise zwischen ungefähr 15 Gew.-% und 50 Gew.-% der Trockenmasse, aufweisen, einer thermischen Behandlung bei einer Temperatur zwischen ungefähr 120°C und 140°C unter einem Druck, der über Atmosphärendruck liegt, während einer ausreichenden Zeitspanne, um die Bildung von kristallinen Amylose-Lipid-Komplexen zu ermöglichen, unterzogen werden, wobei die Bestandteile bei einer mit Überschuss von Wasser durchgeführten Differentialthermoanalyse durch ein Maximum gekennzeichnet sind, dessen Spitzentemperatur über 100 °C liegt.

5. Verfahren gemäß Anspruch 4, **dadurch gekennzeichnet, dass** die Behandlungsdauer zwischen 30 Sekunden und 10 Minuten und vorzugsweise zwischen 2 und 5 Minuten liegt.

6. Verfahren gemäß einem der Ansprüche 4 und 5, **dadurch gekennzeichnet, dass** es kontinuierlich durchgeführt wird, wobei in diesem Fall die Temperatur des Nahrungsmittels vor dem Vorkochen auf ungefähr zwischen 60°C und 100°C und vorzugsweise zwischen 80°C und 100°C erhöht wird, um eine Verklumpung der als Schüttgut behandelten Produkte zu verhindern.

7. Verfahren zur Herstellung von Nahrungsmitteln auf der Basis von Grießen und/oder Mehlen von Getreiden und/oder irgendeinem anderen fragmentierten stärkehaltigen Produkt, denen gegebenenfalls Lipide zugesetzt sind und die in Form gebracht und vorgekocht sind, wobei das Verfahren die folgenden Schritte umfasst:
- Behandlung der Nahrungsmittel oder ihrer Rohstoffe zur Gelatinisierung der Stärke; und
- thermische Behandlung der Nahrungsmittel bei einer Temperatur, die die Bildung von kristallinen Amylose-Lipid-Komplexen ermöglicht.

8. Nahrungsmittel, das nach dem Verfahren gemäß einem der Ansprüche 4 bis 7 erhalten werden kann.
